# EUROPÄISCHE PATENTANMELDUNG

(11) **EP 2 000 731 A1**
(43) Veröffentlichungstag der Anmeldung: **10.12.2008**
(21) Anmeldenummer: 08401002.4
(22) Anmeldetag: 06.06.2008
(51) Int. Cl.: F16L 55/13, F16J 13/00

(54) **Verschluss und Verfahren zum dichten Verschliessen von Bohrungen**

(30) Priorität: 07.06.2007 DE 102007027004
(71) Anmelder: Krüger, Karlheinz, 27386 Brockel (DE)
(72) Erfinder: Krüger, Karlheinz, 27386 Brockel (DE)
(74) Vertreter: Hansen, Jochen

(57) **Zusammenfassung**

Die Erfindung betrifft ein Verfahren zum dichten Verschließen von Bohrungen und einen Verschluss (1), der eine Topfform aufweist mit einem Verschlussboden (12), einer Verschlusswandung (10) und einer Verschlussöffnung (11), die einen lichten Verschlussinnenraum (13) bilden, und einem Expansionsorgan (14), das in den lichten Verschlussinnenraum (13) zum plastischen radialen Aufweiten der Verschlusswandung (10) eindringend angeordnet ist, und einem Bund (15), dessen Unterseite (151) nach Einsetzen des Verschlusses (1) in die im Werkstück (2) befindliche Bohrung (3) auf einer Bohrungsberandung (31) vollflächig aufliegt, wobei die Bohrung (3) eine Fase (311) mit einem Spitzenwinkel und einem Außendurchmesser hat, wobei die Unterseite (151) des Bunds (15) des Verschlusses (1) eine Kegelstumpfmantelfläche mit identischem Spitzenwinkel und Außendurchmesser der Fase (311) aufweist.

## Beschreibung

Die Erfindung betrifft einen Verschluss, der eine Topfform aufweist mit einem Verschlussboden, einer Verschlusswandung und einer Verschlussöffnung, die einen lichten Verschlussinnenraum bilden, mit einer Belastungsseite, die durch die Außenseite des Verschlussbodens beschrieben ist, einer Verschlussseite, die sich auf der Seite der Verschlussöffnung, gegenüber der Belastungsseite befindet, einem am lichten Verschlussinnenraum befindlichen Expansionsorgan, dessen Außendurchmesser etwas größer als der Innendurchmesser des Verschlussinnenraums ist und auf der Verschlussseite in den lichten Verschlussinnenraum eindringend angeordnet ist, wobei dieses zum plastischen radialen Aufweiten der Verschlusswandung in den lichten Verschlussinnenraum in Richtung der Belastungsseite zum dichten formschlüssigen Verschließen einer in eine Oberfläche eines Werkstücks getätigten Bohrung hineingedrückt wird und einem Bund an der Verschlussseite des Verschlusses mit einer Unterseite, zur Belastungsseite gerichtet, und einer Oberseite, zur Verschlussseite gerichtet, aufweist, wobei die Unterseite des Bunds nach Einsetzen des Verschlusses in die im Werkstück befindliche Bohrung auf einer Bohrungsberandung, die sich auf der an die Bohrung angrenzenden Oberfläche des Werkstücks anschließt, vollflächig aufliegt.

Ferner betrifft die Erfindung ein Verfahren zum dichten Verschließen von Bohrungen in einem Werkstück mit einem Verschluss mit den Schritten, Ausführen der zu erstellenden Bohrung im Werkstück mit einem werkstückspezifischen Bohrer, Einführen des topfförmigen Verschlusses in die dicht zu verschließende Bohrung, wobei der Bund des Verschlusses den Verschluss vor zu tiefem Eindringen bewahrt und den Verschluss lagert und ausrichtet, indem der Bund des Verschlusses vollflächig auf der Berandung der Bohrung aufliegt, Einpressen des Expansionsorgans des Verschlusses von der Verschlussseite in Richtung der Belastungsseite in den Verschlussinnenraum, wodurch die Außenoberfläche der Verschlusswandung durch plastisches radiales Aufspreizen des Verschlussinnenraums durch das Expansionsorgan an die Wand der Bohrung dichtend angeformt wird.

Derartige Verschlüsse und Verfahren zum dichtenden Verschließen von Bohrungen sind bereits lange bekannt. Dabei wird eine Bohrung mittels der beanspruchten, üblicherweise aus einem Metall, wie Stahl, gefertigten Verschlüsse durch Einbringen eines Expansionsorgans in den Verschlussinnenraum dichtend an die Innenwand der Bohrung angepresst, wodurch die Bohrung verschlossen wird. Der Aufbau und die Verwendung eines solchen Stopfens zum Verschließen von Bohrungen sind sehr einfach und genießt daher einen sehr hohen Verbreitungsgrad innerhalb der Industriebranche des Maschinenbaus.

Verschlüsse, die, nachdem sie in eine Bohrung eingesetzt sind, plastisch verformt werden, um eine Bohrung oder ein Loch in einem metallischen Werkstück druckdicht zu verschließen, wobei ein Expansionsorgan zur plastischen Aufweitung in den Verschluss hineingetrieben wird, und Verfahren hierzu sind durch die US 4,436,117, US 3,525,453, CH 508 828, sowie EP 0 364 699 B1 bekannt.

Beispielsweise wird in der EP 0 364 699 B1 ein Verfahren zum dichten Verschliessen einer Bohrung beschrieben. Hierbei handelt es sich in der Anordnung um Stufenbohrungen, bei denen eine erste Bohrung in das Werkstück gefertigt wird, um die Funktion innerhalb des Werkstücks zu realisieren, beispielsweise die innere Verbindung zweier Druckleitungskanäle innerhalb eines metallischen Hydraulikblocks, und einer zweiten Bohrung, die koaxial zur ersten Bohrung und stufenförmig von der ersten Bohrung radial nach außen abgesetzt ist, welche dazu dient, den Verschluss am Verschlussboden zu lagern, um ein zu tiefes Einfallen in die Bohrung zu vermeiden. Diese Art des dichten Verschließens einer Bohrung mittels eines Verschlusses ist mit den bisher auf dem Markt erhältlichen und bekannten Verschlüssen sehr aufwendig, da in zwei unterschiedlichen Prozessen mit zwei unterschiedlichen Bohrern in das Werkstück gebohrt werden muss.

Weiter ist durch die CH 508 828 bereits seit 1970 ein Bund bekannt, der an der Verschlussseite des Verschlusses angesetzt ist. Durch diesen Bund ist es möglich auf eine Stufenbohrung zu verzichten. Jedoch zeigt sich hierbei, dass der Verschluss dann keine ebene Oberfläche mit der Werkstückoberfläche aufweist, was dazu führt, dass keine flächenbündigen Werkstücke aufeinander gesetzt werden können, da sich so ein Spalt zwischen den beiden Werkstücken ergibt, der wenigstens der Höhe des Bunds des Verschlusses entspricht.

Außerdem beschreibt die WO 00/37844 eine Vorrichtung zum dichtenden Verschließen von Druckmittel beaufschlagten dünnwandigen Hohlräumen mittels einer Verschlussanordnung, bestehend aus einer Verschlusshülse, einem in dieser Verschlusshülse geführten Zugstift mit einem Schaft und einem Kopf, wobei der Kopf die Verschlusshülse später auf der druckbeaufschlagten Seite erst aufweitet und dann abdichtet und eine Sollbruchstelle zum späteren Abtrennen des Schafts vorgesehen ist.

Der vorliegenden Erfindung liegt die Aufgabe zugrunde, eine Weiterentwicklung eines Verschlusses und eines Verfahrens zum dichten Verschließen von Bohrungen zu betreiben, wobei zum einen auf prozessintensive und aufwendige Stufenbohrungen verzichtet werden kann und zum anderen ein flächenbündiger Abschluss des Verschlusses mit der Werkstückoberfläche entsteht.

Gelöst wird diese Aufgabe mit einem Verschluss nach Anspruch 1 und einem Verfahren nach Anspruch 9.

Dadurch, dass die an der Oberfläche beginnende Bohrung eine Fase an der Oberfläche des Werkstücks mit einem Spitzenwinkel und einem Außendurchmesser hat, wobei die Unterseite des Bunds des Verschlusses eine Kegelstumpfmantelfläche mit identischem Spitzenwinkel und Außendurchmesser der Fase aufweist und die Höhe des Bunds des Verschlusses genau der Tiefe der Fase entspricht, kann eine plane Oberfläche des Werkstücks erstellt werden, indem der Bund des Verschlusses formschlüssig in der Fase der Bohrungsberandung aufliegt und die Oberkante des Bunds bündig mit der Oberfläche des Werkstücks abschließt oder zurückspringt. Weiter wird der Verschluss koaxial in der Bohrung gelagert und koaxial in der Bohrung ausgerichtet, um den Verschluss dort genau ausgerichtet einpressen zu können, selbstverständlich ist die Lagerung hierbei genauer als bei einer planen Unterseite des Bunds, da bei einer größeren Toleranz des Durchmessers der Bohrung der Verschluss gleichwohl koaxial ausgerichtet wird. Der Bund, welcher größenabhängig dimensioniert ist, bildet dabei ein Widerlager für den in der Bohrung eingesetzten Verschluss während des plastischen Verformungsprozesses durch das Expansionsorgan, welches in den Verschlussinnenraum eingebracht wird.

Im Gegensatz zur Ausbildung eines Verschlusses nach CH 508 828 mit einem auf der Außenoberfläche des Werkstücks aufliegenden geraden Bund, wird beim Einpressvorgang und der plastischen, radialen Aufspreizung durch das in den Verschlussinnenraum eindringende Expansionsorgan eine Abstützung der radial und in das Werkstück hineingerichteten Kräfte am Material des Werkstücks erreicht. Dabei wird ab Beginn des Einpressvorgangs sowohl die Axialkomponente als auch die schnell ansteigende Radialkomponente der beim Einpressvorgang wirkenden Kräfte am Verschluss von der Fase der Bohrung an der Bohrungsberandung aufgenommen. Einem Abscheren des Bunds wird somit effektiv entgegengewirkt. Durch den Bund des Verschlusses ist die Eindringtiefe des Verschlusses in die Bohrung genau begrenzbar, da der Bund auf dem Material des Werkstücks aufliegt.

Verfahrensgemäß wird eine Vorbohrung mit einem Anbohrer in die Oberfläche des Werkstücks getätigt, wobei die Vorbohrung, die mittels eines geeigneten Anbohrers durchgeführt wird, tiefer als für eine Vorbohrung nötig, jedoch nur so tief, dass eine angefaste Bohrungsberandung mit einer ausreichenden Tiefe am äußeren Randbereich der Fase entsprechend der Höhe des Bunds des Verschlusses, der im weiteren Verfahren einzusetzen ist, entsteht, so dass der Verschluss auf der Verschlussseite mit der Oberfläche des Werkstücks bündig abschließt, ausgeführt wird. Hierdurch bleibt eine plane Oberfläche trotz eingesetztem Verschluss am Werkstück erhalten, an der weitere Anbauteile, die später plan auf der Oberfläche des Werkstücks aufliegen sollen, befestigt werden können.

Das Material der Verschlusswandung weist eine gleiche oder größere Härte als das Material des Werkstücks auf, da hierdurch gewährleistet werden kann, dass der Verschluss respektive die Verschlusswandung, welche durch das Expansionsorgan plastisch radial nach außen verformt wird, in das Material des Werkstücks eindringt und so eine materialfeste, sich nicht selbstlösende Verbindung eingeht, die den Verschluss am Herauswandern hindert.

Um das Material der Verschlusswandung plastisch verformen zu können, wird das Material des Expansionsorgans so gewählt, dass es härter als das Material der Verschlusswandung ausgebildet ist, damit beim Einpressvorgang sich das Expansionsorgan nicht plastisch verformt, sondern die Verschlusswandung.

Dadurch, dass das Expansionsorgan kugelförmig ausgebildet ist, lässt es sich besonders gut in den Innenraum des Verschlusses einpressen.

Alternativ lässt sich das Expansionsorgan kegelstumpfförmig oder leicht konisch zylinderförmig ausbilden, wodurch ein anderer plastischer Verformungsbereich innerhalb des Verschlusses erzielt werden kann.

Wenn die Außenoberfläche der Verschlusswand des Verschlusses kreisringförmige umlaufende Nuten aufweist, können sich diese umlaufenden kreisringförmigen Nuten radial in das Werkstück während des plastischen Verformungsprozesses eindrücken. Diese Materialverbindung, bei der eine Materialmischung in Schichten vorgenommen wird, abwechselnd das Material der umlaufenden kreisringförmigen Nuten und das Material des Werkstücks, verhindert ein Zurücktreiben des Verschlusses bei höheren Drücken, insbesondere bei pulsierenden Druckverläufen, die auf der Belastungsseite anstehen.

Um einen weiter gesteigerten Halt gegen Zurücktreiben des Verschlusses durch noch höhere Drücke, die auf der Belastungsseite auftreten, zu erhalten, verkrallen sich die kreisringförmigen umlaufenden Nuten auf der Außenoberfläche der Verschlusswandung in die Wand der Bohrung. Dazu sind die kreisringförmigen umlaufenden Nuten auf der Außenoberfläche der Verschlusswandung im Querschnitt zacken- und/oder zahnförmig ausgebildet. Die Seite der Nuten, die jeweils auf der Belastungsseite des Verschlusses liegt, ist senkrecht zur Außenoberfläche der Verschlusswandung ausgebildet und die Seite der Nuten, die jeweils auf der Verschlussseite des Verschlusses liegt, ist schräg in einem spitzen Winkel α zur Außenoberfläche der Verschlusswandung ausgebildet. Hierdurch lässt sich ein Maximum an Rückhaltemoment erzielen, was den möglichen Einsatzbereich des hier beanspruchten Verschlusses vergrößert.

Das Material des Expansionsorgans, als auch des Verschlusses selbst, kann nicht rostend ausgebildet sein, so dass ein erneutes Lackieren eines bereits lackierten Werkstücks vermieden werden kann. Speziell bei Hydraulikblöcken, die teilweise schon vorlackiert zur Fertigung gelangen, wäre eine erneute Lackierung nicht mehr von Nöten, bzw. ist häufig unerwünscht.

Um eine konstante Kraft auf das Expansionsorgan während des gesamten Einpressvorgangs auszuüben, wird das Expansionsorgan mit einem hydraulischen Werkzeug eingepresst. Dadurch werden übermäßige oder zu geringe Kräfte während des Einpressvorgangs des Expansionsorgans verhindert.

Dadurch, dass der Druck des hydraulischen Werkzeugs während der Einpressung des Expansionsorgans gemessen, aufgezeichnet und ausgewertet wird, ist eine Qualitätskontrolle des dichten Verschlusses des Werkstücks möglich, so dass nachvollzogen werden kann, ob der Verschluss richtig sitzt und die Bohrung dicht verschlossen hat.

Nachfolgend wird ein Ausführungsbeispiel der Erfindung anhand der beiliegenden Zeichnungen beschrieben.

Darin zeigt:

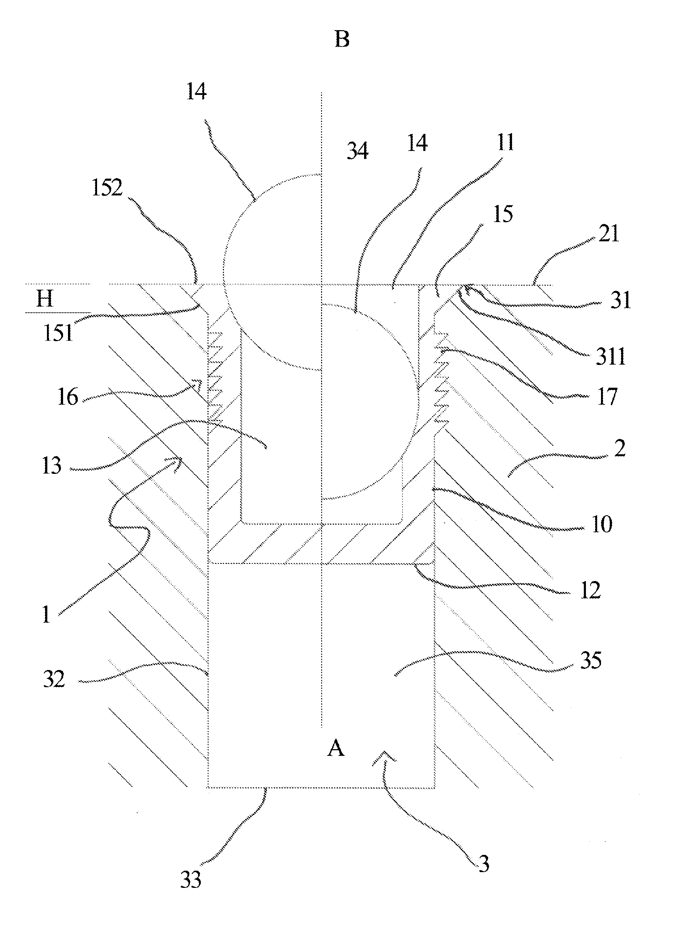

- Fig. 1: eine Längsschnittdarstellung des erfindungsgemäßen Verschlusses in einer Bohrung

In Fig. 1 ist ein Verschluss 1 in einer Bohrung 3 dargestellt, die in einem Werkstück 2, beispielsweise ein Hydraulikblock, mit einer Oberfläche 21, bevorzugt orthogonal zur Oberfläche 21, von einer Verschlussseite B her in Richtung einer Belastungsseite A angeordnet ist. Die Bohrung 3 weist eine Mündung 34, eine Wand 32 und einen Boden 33 auf, die einen Bohrungsinnenraum 35 begrenzen.

Der Verschluss 1 weist eine Verschlusswandung 10, eine Verschlussöffnung 11 und einen Verschlussboden 12 auf, die einen Verschlussinnenraum 13 aufspannen und begrenzen. In der Verschlussöffnung 11 ist von der Verschlussseite B her ein Expansionsorgan 14 angeordnet, welches in den Verschlussinnenraum 13 eindringend zum späteren Einpressen in Richtung der Belastungsseite A eingesteckt ist. An der Verschlusswandung 10 sind auf deren Mantelfläche auf der Außenseite kreisringförmige umlaufende Nuten 17 vorgesehen und im Bereich der Verschlussöffnung 11 ist ein Bund 15 mit einer Unterseite 151, einer Oberseite 152 und einer Höhe H angeordnet. Der Bund 15 liegt mit seiner Unterseite 151 bündig auf einer Bohrungsberandung 31 auf, die den Randbereich der Bohrung 3 um die Mündung 34 darstellt. Die Bohrungsberandung 31 weist eine Fase 311 auf. Hierbei wird das Augenmerk besonders auf die Unterseite 151 des Bunds 15 des Verschlusses 1 und die Fase 311 der Bohrungsberandung 31 gerichtet.

Die Unterseite 151 des Bunds 15 weist eine Kegelstumpfmantelfläche mit identischem Spitzenwinkel und Außendurchmesser der Fase 311 der Bohrungsberandung 31 auf. Dabei ist es wichtig, dass der Spitzenwinkel und der Außendurchmesser der Fase 311 nahezu identisch mit dem Spitzenwinkel und dem Außendurchmesser der Kegelstumpfmantelfläche der Unterseite 151 des Bunds 15 sind, wodurch ein formschlüssiges und vollflächiges Aufsetzen der Unterseite 151 des Bunds 15 in die Oberfläche 21 des Werkstücks 2 im Bereich der Bohrungsberandung 31 gewährleistet ist. Der Bund weist ferner eine Höhe H auf, die der Tiefe der als Fase 311 ausgebildeten Bohrungsberandung entspricht.

Der Bund 15 begrenzt so die Eindringtiefe des Verschlusses 1 innerhalb der Bohrung, lagert ihn, und richtet den Verschluss 1 in der zu verschließenden Bohrung 3 koaxial aus. Weiterhin dient der Bund 15 als Widerlager für die während des Einpressvorgangs auftretenden Kräfte, die von der Verschlussseite B auf das Expansionsorgan 14 auf den Verschluss 1 einwirken. Der Verschluss 1 sitzt passgenau in der Bohrung 3.

Das Expansionsorgan 14, welches während des Einpressvorganges in den Verschlussinnenraum 13 eingepresst wird, verformt die Verschlusswandung 10 plastisch, wodurch die kreisringförmigen umlaufenden Nuten 17, welche vorzugsweise im Querschnitt zackenförmig ausgebildet sind, in die Wand 32 der Bohrung 3 im Werkstück 2 eingedrückt werden. Hierbei bildet der Übergang zwischen der plastisch verformten Verschlusswandung 10 und der Wand 32 der Bohrung 3 den Dichtbereich des Verschlusses 1.

Erfindungsgemäß wird ein bündiger Abschluß zwischen der Oberseite 152 des Bunds 15 des Verschlusses 1 mit der Oberfläche 21 des Werkstücks 2 erhalten, so dass etwaige Anbauteile, die im Bereich des Verschlusses angeordnet werden sollen, ebenfalls bündig auf die Oberfläche 21 des Werkstücks 2 aufgebracht werden können.

Weiter ist die Funktions- und Arbeitsweise des Expansionsorgans 14 dargestellt. Auf der linken Hälfte der Figur 1 ist das Expansionsorgan 14 im Zustand vor dem Einpressen des Expansionsorgans 14 gezeigt. In der rechten Hälfte ist das Expansionsorgan 14 nach dem Einpressvorgang dargestellt, wobei hier die Verschlusswandung 10 mit den auf der Außenseite angeordneten kreisringförmigen umlaufenden Nuten 17 plastisch verformt ist.

Bei dem Einpressvorgang dringt das Expansionsorgan 14 in den Verschlussinnenraum 13 des Verschlusses 1 durch die Verschlussöffnung 11, in der das Expansionsorgan gehaltert ist, ein. Während dieses Einpressvorgangs, wird eine Kraft auf das Expansionsorgan 14 von der Verschlussseite B ausgeübt, wodurch das Expansionsorgan 14 in den Verschlussinnenraum 13 in Richtung der Belastungsseite A eingepresst wird. Dabei drückt das Expansionsorgan 14 die Verschlusswandung 10 mit den auf der Außenseite befindlichen kreisringförmigen umlaufenden Nuten in die Wand 32 der Bohrung 3, wodurch eine dauerhafte, nicht lösbare Materialverbindung entsteht. Gleichwohl sind kreisringförmige umlaufende Nuten für eine dichtende Materialverbindung nicht zwingend erforderlich.

### Bezugszeichenliste

- 1: Verschluss
- 10: Verschlusswandung
- 11: Verschlussöffnung
- 12: Verschlussboden
- 13: Verschlussinnenraum
- 14: Expansionsorgan
- 15: Bund
- 151: Unterseite
- 152: Oberseite
- 16: Dichtungsbereich
- 17: kreisringförmige umlaufende Nuten

- 2: Werkstück
- 21: Oberfläche des Werkstücks

- 3: Bohrung
- 31: Bohrungsberandung
- 31: Fase
- 32: Wand
- 33: Boden
- 34: Mündung der Bohrung
- 35: Bohrungsinnenraum

- A: Belastungsseite
- B: Verschlussseite
- H: Höhe des Bunds

## Patentansprüche

1. Verschluss (1), der eine Topfform aufweist mit einem Verschlussboden (12), einer Verschlusswandung (10) und einer Verschlussöffnung (11), die einen lichten Verschlussinnenraum (13) bilden, mit einer Belastungsseite (A), die durch die Außenseite des Verschlussbodens (12) beschrieben ist, einer Verschlussseite (B), die sich auf der Seite der Verschlussöffnung (11), gegenüber der Belastungsseite (A) befindet, einem am lichten Verschlussinnenraum (13) befindlichen Expansionsorgan (14), dessen Außendurchmesser etwas größer als der Innendurchmesser des Verschlussinnenraums (13) ist und auf der Verschlussseite (B) in den lichten Verschlussinnenraum (13) eindringend angeordnet ist, wobei dieses zum plastischen radialen Aufweiten der Verschlusswandung (10) in den lichten Verschlussinnenraum (13) in Richtung der Belastungsseite (A) zum dichten formschlüssigen Verschließen einer in eine Oberfläche (21) eines Werkstücks (2) getätigten Bohrung (3) hineingedrückt wird, und einem Bund (15) an der Verschlussseite (B) des Verschlusses (1) mit einer Unterseite (151), zur Belastungsseite (A) gerichtet, und eine Oberseite (152), zur Verschlussseite (B) gerichtet, aufweist, wobei die Unterseite (151) des Bunds (15) nach Einsetzen des Verschlusses (1) in die im Werkstück (2) befindliche Bohrung (3) auf einer Bohrungsberandung (31), die sich auf der an die Bohrung (3) angrenzenden Oberfläche (21) des Werkstücks (2) anschließt, vollflächig aufliegt, **dadurch gekennzeichnet, dass** die an der Oberfläche (21) beginnende Bohrung (3) eine Fase (311) an der Oberfläche (21) des Werkstücks (2) mit einem Spitzenwinkel und einem Außendurchmesser hat, wobei die Unterseite (151) des Bunds (15) des Verschlusses (1) eine Kegelstumpfmantelfläche mit identischem Spitzenwinkel und Außendurchmesser der Fase (311) aufweist und die Höhe (H) des Bunds (15) des Verschlusses (1) genau der Tiefe der Fase (311) entspricht.

2. Verschluss nach Anspruch 1, **dadurch gekennzeichnet, dass** das Material der Verschlusswandung (10) eine gleiche oder größere Härte als das Material des Werkstücks (2) aufweist.

3. Verschluss nach Anspruch 1 oder 2, **dadurch gekennzeichnet, dass** das Material des Expansionsorgans (14) härter als das Material der Verschlusswandung (10) ausgebildet ist.

4. Verschluss nach Anspruch 1, 2 oder 3, **dadurch gekennzeichnet, dass** das Expansionsorgan (14) kugelförmig ausgebildet ist.

5. Verschluss nach einem der Ansprüche 1 bis 4, **dadurch gekennzeichnet, dass** das Expansionsorgan (14) kegelstumpfförmig ausgebildet ist.

6. Verschluss nach einem der vorangehenden Ansprüche, **dadurch gekennzeichnet, dass** die Außenoberfläche der Verschlusswandung (10) des Verschlusses (1) kreisringförmige umlaufende Nuten (17) aufweist.

7. Verschluss nach Anspruch 6, **dadurch gekennzeichnet, dass** die kreisringförmigen umlaufenden Nuten (17) auf der Außenoberfläche der Verschlusswandung (10) im Querschnitt zacken- und/oder zahnförmig ausgebildet sind, wobei die Seite der Nuten (17), die jeweils auf der Belastungsseite (A) des Verschlusses (1) liegt, senkrecht zur Außenoberfläche der Verschlusswandung (10) ausgebildet ist und die Seite der Nuten (17), die jeweils auf der Verschlussseite (B) des Verschlusses (1) liegt, schräg in einem spitzen Winkel α zur Außenoberfläche der Verschlusswandung (10) ausgebildet ist.

8. Verschluss nach einem der vorangehenden Ansprüche, **dadurch gekennzeichnet, dass** das Material des Expansionsorgans (14) und/oder des Verschlusses (1) nichtrostend ausgebildet ist.

9. Verfahren zum dichten Verschließen von Bohrungen (3) in einem Werkstück (2) mit einem Verschluss (1) nach einem der vorangehenden Ansprüche mit den Schritten:
- Ausführen der zu erstellenden Bohrung (3) im Werkstück (2) mit einem werkstückspezifischen Bohrer,
- Einführen des topfförmigen Verschlusses (1) in die dicht zu verschließende Bohrung (3), wobei der Bund (15) des Verschlusses (1) den Verschluss (1) vor zu tiefem Eindringen bewahrt und den Verschluss (1) lagert und ausrichtet, indem der Bund (15) des Verschlusses (1) vollflächig auf der Berandung (31) der Bohrung (3) aufliegt,
- Einpressen des Expansionsorgans (14) des Verschlusses (1) von der Verschlussseite (B) in Richtung der Belastungsseite (A) in den Verschlussinnenraum (13), wodurch die Aussenoberfläche der Verschlusswandung (10) durch plastisches radiales Aufspreizen des Verschlussinnenraums (13) durch das Expansionsorgan (14) an die Wand (32) der Bohrung (3) dichtend angeformt wird, **dadurch gekennzeichnet, dass** eine Vorbohrung mit einem Anbohrer in die Oberfläche (21) des Werkstücks (2) getätigt wird, wobei die Vorbohrung, die mittels eines geeigneten Anbohrers durchgeführt wird, tiefer als für eine Vorbohrung nötig, jedoch nur so tief, dass eine angefaste Bohrungsberandung (31) mit einer ausreichenden Tiefe am äußeren Randbereich der Fase (311) entsprechend der Höhe (H) des Bunds (15) des Verschlusses (1), der im weiteren Verfahren einzusetzen ist, entsteht, so dass der Verschluss (1) auf der Verschlussseite (B) mit der Oberfläche des Werkstücks (21) bündig abschließt, ausgeführt wird.

10. Verfahren nach Anspruch 9, **dadurch gekennzeichnet, dass** das Expansionsorgan mit einem hydraulischen Werkzeug eingepresst wird.

11. Verfahren nach Anspruch 10, **dadurch gekennzeichnet, dass** der Druck des hydraulischen Werkzeugs während der Einpressung des Expansionsorgans gemessen, aufgezeichnet und ausgewertet wird.
